# FASCICULE DE BREVET EUROPEEN

(11) **EP 4 087 748 B1**
(45) Date de publication et mention de la délivrance du brevet: **22.11.2023**
(21) Numéro de dépôt: 20841984.6
(22) Date de dépôt: 07.12.2020
(51) Int. Cl.: B60K 6/48, B60W 10/02, B60W 10/06, B60W 20/00, B60W 20/10, B60W 30/188

(54) **PROCEDE POUR OPTIMISER UN REGIME DE MOTEUR THERMIQUE D'UN VEHICULE A BOITE DE VITESSE AUTOMOTISEE LORS D'UN ACCOSTAGE**
VERFAHREN ZUR OPTIMIERUNG DER MOTORDREHZAHL EINES KRAFTFAHRZEUGMOTORS MIT AUTOMATISCHEM GETRIEBE WÄHREND DER KUPPLUNG
METHOD FOR OPTIMIZING THE ENGINE SPEED OF A HEAT ENGINE OF A VEHICLE WITH AN AUTOMATIC GEARBOX DURING COUPLING

(30) Priorité: 09.01.2020 FR 2000152
(43) Date de publication de la demande: 16.11.2022
(73) Titulaire: PSA Automobiles SA, 78300 Poissy (FR)
(72) Inventeur: ROCQ, Gaetan, 78125 LA BOISSIERE ECOLE (FR); MILHAU, Yohan, 78630 ORGEVAL (FR); BARDET, Arnaud, 78150 LE CHESNAY (FR); HABBANI, Ridouane, 92600 ASNIERES SUR SEINE (FR); FREIRE SUAREZ, Violette, 78150 LE CHESNAY (FR); BASTIANI, Philippe, 78300 POISSY (FR)
(86) Numéro de dépôt international: PCT/FR2020/052295
(87) Numéro de publication internationale: WO 2021/140284

(56) Documents cités:
- EP-A1- 3 543 080
- EP-A2- 0 328 299
- US-B1- 6 319 173

## Description

L'invention concerne un procédé pour optimiser un régime de moteur thermique d'un véhicule à boite de vitesse automatisée, lors d'un accostage, ainsi qu'un véhicule mettant en oeuvre un tel procédé.

Les véhicules hybrides de type PHEV (Plug in Hybrid Electric Vehicule) comportent usuellement un moteur thermique, une machine électrique, un embrayage, une boite de vitesse reliant l'embrayage aux roues via un ou plusieurs rapports de démultiplication, l'embrayage permettant l'accostage par glissement entre le moteur thermique et la boite de vitesse, la machine électrique étant connectée sur le réseau et attelée à la boite de vitesse, ainsi qu'un stockeur principal de type batterie. L'utilisation de l'embrayage permet le découplage entre le moteur thermique et les roues.

L'embrayage permet de transmettre le couple du moteur par glissement entre le régime du moteur thermique et le régime de la machine électrique reliée aux roues : en effet, le moteur thermique n'est exploitable qu'au-dessus d'un régime minimum (appelé régime de ralenti).

Lors d'un accostage moteur (comme par exemple un décollage ou un démarrage puis un accostage du moteur en roulant pour un véhicule hybride), il est nécessaire de maîtriser le régime du moteur afin de répondre à différentes contraintes : il faut empêcher que le régime du moteur ne descende pour éviter que le moteur ne cale, il faut permettre une transmission de couple de l'arbre primaire suffisante pour le conducteur et il faut optimiser le niveau d'acoustique et le niveau vibratoire du moteur en lui faisant suivre un régime spécifique.

Or, dans ces situations d'accostage du moteur et au regard des équations fondamentales de la dynamique, le régime d'un moteur donné est la résultante du couple fourni par le moteur thermique et du couple prélevé par l'embrayage et fourni à la roue.

Il est donc primordial de maîtriser le compromis entre le couple du moteur thermique et le couple de l'embrayage.

Certaines solutions existantes ont pour objectif de gérer l'accostage moteur en utilisant l'embrayage pour réaliser le couple demandé par le conducteur. Une autre solution vise à contrôler en régulation le régime du moteur thermique afin de suivre le régime optimum du moteur garantissant le respect des contraintes multi prestations, tout en fournissant le couple nécessaire à la transmission de couple à la roue via l'embrayage.

On connaît du document FR3054189 un dispositif de contrôle du couple fourni par une machine motrice d'un véhicule hybride parallèle à boite manuelle, en fonction de l'embrayage : la solution technique proposée dans ce document détermine un couple de limitation d'une machine électrique motrice en fonction d'une position d'une pédale d'embrayage. Ce dispositif ne permet pas d'éviter de transmettre trop de couple au moteur thermique et ne s'applique qu'aux groupes motopropulseur avec boite de vitesse manuelle et avec une pédale d'embrayage.

On connaît encore du document EP3543080A1 un procédé pour optimiser un régime de moteur thermique d'un véhicule à boîte de vitesse automatisée lors d'un accostage.

L'invention offre une alternative de fonctionnement qui évite les désagréments acoustiques et vibratoires et qui permet de suivre la volonté du conducteur. L'invention concerne à cet effet un procédé pour optimiser un régime de moteur thermique d'un véhicule à boite de vitesse automatisée lors d'un accostage, ledit véhicule comportant en outre un système d'embrayage, une boite de vitesse comprenant une machine électrique assurant la commande d'un mouvement de transmission aux roues dudit véhicule, ledit accostage du moteur thermique étant assuré par glissement dudit embrayage entre ledit moteur thermique en rotation et un arbre primaire relié aux roues, ledit procédé étant mis en oeuvre par un dispositif d'optimisation communiquant avec un module de commande moteur et un module de commande embrayage.

Le procédé conforme à l'invention comporte une étape suivant laquelle une information de régime de moteur réel est fournie par ledit module de commande moteur audit dispositif d'optimisation, une autre étape suivant laquelle ladite information de régime moteur réel est comparée à une information de consigne de régime de moteur par ledit dispositif d'optimisation, et encore une autre étape suivant laquelle, en cas de non concordance entre lesdites informations de régime moteur réel et de consigne de régime, le dispositif d'optimisation transmet au module de commande embrayage un facteur d'atténuation du gradient de couple embrayage pour limiter le gradient de couple embrayage, ledit facteur d'atténuation du gradient de couple d'embrayage étant calculé à partir d'un facteur de charge de moteur thermique qui est fonction du couple du moteur thermique réalisé et d'un couple maximum, et à partir d'un gradient d'écart de régime entre un régime de moteur thermique réel et une consigne de régime de moteur thermique.

Ainsi mis en oeuvre, le procédé conforme à l'invention permet de suivre la volonté du conducteur en fournissant un couple de moteur thermique plus haut, grâce au régime du moteur thermique qui est plus haut. Le procédé résout également les désagréments acoustiques et vibratoires car le régime du moteur thermique suit sa consigne de régime optimal.

Par ailleurs, le procédé évite le calage du moteur thermique en éloignant le régime du moteur thermique de son régime de ralenti.

Enfin, le procédé limite de risque de chocs et d'oscillations lors du collage de l'embrayage du fait d'une bonne incidence entre le régime de l'arbre primaire et le régime du moteur thermique.

Le procédé conforme à l'invention peut également comprendre les caractéristiques suivantes :
- ladite information de consigne de régime du moteur thermique est calculée par le module de commande moteur à partir d'une consigne de couple moteur qui est identifiée suivant une information de position d'une pédale d'accélération actionnée par un conducteur.

L'invention concerne également un ensemble pour optimiser un régime de moteur thermique dans un véhicule lors d'un accostage, ledit véhicule comportant en outre un système d'embrayage, une boite de vitesse comprenant une machine électrique assurant la commande d'un mouvement de transmission aux roues dudit véhicule, ledit accostage du moteur thermique étant assuré par glissement dudit embrayage entre un moteur en rotation et un arbre primaire relié aux roues.

Selon l'invention, l'ensemble comporte un dispositif d'optimisation, un module de commande moteur et un module de commande embrayage, ledit module de commande moteur fournissant une information de régime de moteur réel, ledit dispositif d'optimisation étant apte à comparer ladite information de régime moteur réel avec une information de consigne de régime de moteur thermique et à transmettre au module de commande embrayage un facteur d'atténuation du gradient de couple embrayage pour limiter le gradient de couple embrayage en cas de non concordance entre lesdites informations de régime moteur réel et de consigne de régime, ledit dispositif d'optimisation calculant ledit facteur d'atténuation dudit gradient de couple d'embrayage à partir d'un facteur de charge de moteur thermique qui est fonction du couple du moteur thermique réalisé et d'un couple maximum, et à partir d'un gradient d'écart de régime entre un régime de moteur thermique réel et une consigne de régime de moteur thermique.

L'ensemble peut également comporter les caractéristiques suivantes :
- le module de commande moteur calcule ladite information de consigne de régime du moteur thermique à partir d'une consigne de couple moteur qui est identifiée suivant une information de position d'une pédale d'accélération actionnée par un conducteur. Enfin, l'invention concerne un véhicule équipé du dispositif conforme à l'invention, tel que défini ci-dessus.

D'autres avantages et caractéristiques de l'invention apparaîtront à l'examen de la description détaillée d'un mode de mise en oeuvre nullement limitatif, et des dessins annexés, sur lesquels :
[Fig. 1] est un bloc diagramme simplifié montrant une forme de réalisation particulière du dispositif d'établissement de consigne de régime de moteur selon l'invention,
[Fig. 2] est un autre bloc diagramme illustrant les différents modules mis en oeuvre dans le procédé conforme à l'invention,
[Fig. 3] montre des courbes de régime de l'arbre primaire et du moteur en fonction du temps pendant une phase de décollage dans le cas de l'Etat de la Technique, ainsi que des courbes de consigne et de couple mécanique en fonction du temps lors du décollage dans le cas de l'Etat de la technique,
[Fig. 4] montre des courbes de régime de l'arbre primaire et de régime moteur en fonction du temps dans le cadre de la mise en oeuvre du procédé conforme à l'invention, et des courbes de consigne conducteur et de couple embrayage et moteur thermique, ainsi que le facteur de charge moteur, d'atténuation de gradient de couple embrayage et le gradient d'écart de régime en fonction du temps dans le cadre d'une mise en oeuvre du procédé conforme à l'invention.

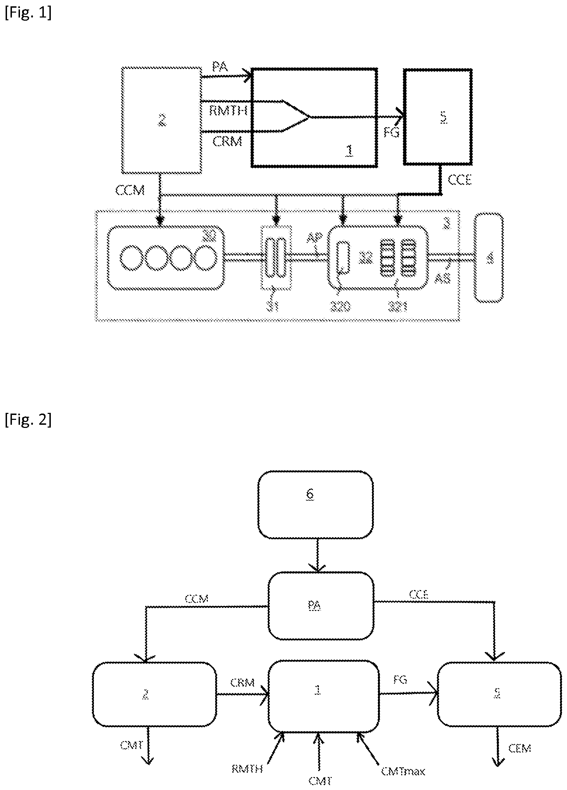

Comme montré en figure 1, l'invention met en oeuvre un ensemble comportant un dispositif d'optimisation 1 qui coopère avec un module de commande moteur 2 et un module de commande embrayage 5.

Le module de commande moteur 2 a pour fonction de commander le fonctionnement d'un groupe motopropulseur 3, c'est-à-dire qu'il a en charge la commande du moteur thermique, d'un embrayage 31, et d'une boite de vitesse automatisée 32.

Le module de commande moteur 2 transmet ne consigne CCM de couple au moteur thermique 30 du groupe motopropulseur 3 du véhicule.

La boite de vitesse 32 est couplée mécaniquement à l'embrayage 31 par son arbre primaire AP et à la roue de véhicule 4 par son arbre de sortie AS.

L'embrayage 31 assure une transmission par glissement commandée du couple mécanique du moteur thermique 30 vers l'arbre primaire AP de la boite de vitesse 32. La boite de vitesse 32 est attelée avec une machine électrique tournante 320 d'hybridation, au niveau de son arbre primaire AP et elle comprend des mécanismes de roues dentées 321 autorisant plusieurs rapports de démultiplications.

Le module de commande moteur 2 échange des informations avec le dispositif d'optimisation conforme à l'invention : Ces informations comprennent une information de pédale d'accélérateur PA et une consigne de régime de moteur CRM. Lors d'un accostage moteur (par exemple un décollage ou un démarrage puis accostage), le module de commande moteur 2 ajuste différents paramètres de fonctionnement du moteur thermique 30 de manière obtenir un régime de moteur asservi sur la consigne de régime de moteur CRM.

Comme on peut le voir en figure 1 et conformément à l'invention, le dispositif d'optimisation 1 reçoit du module de commande moteur 2 une information de régime de moteur réel RMTH. Cette information est comparée à l'information de consigne de régime de moteur CRM par ledit dispositif d'optimisation 1 pour transmettre au module de commande embrayage un facteur FG d'atténuation du gradient de couple embrayage.

Le facteur FG d'atténuation du gradient de couple embrayage conduit à la transmission d'une consigne de couple embrayage CCE qui limite le gradient de couple embrayage.

La figure 2 illustre également schématiquement l'invention : lorsque le conducteur appuie sur la pédale 6 d'accélérateur du véhicule, il communique sa volonté d'accélérer. Une information PA de pédale d'accélérateur est traitée pour transmettre au module de commande moteur 2 une consigne de couple moteur CCM et pour transmettre au module de commande embrayage 5 une consigne de couple embrayage CCE.

Le module de commande moteur 2 communique au dispositif d'optimisation une consigne de régime de moteur thermique CRM.

Le dispositif d'optimisation 1 prend alors en considération le régime du moteur thermique réel RMTH, le couple de moteur thermique réalisé CMT et le couple de moteur thermique maximum CMTmax pour générer le facteur d'atténuation du gradient de couple embrayage FG.

Le module de commande embrayage 5 commande la limitation du couple embrayage CEM en fonction du facteur d'atténuation FG.

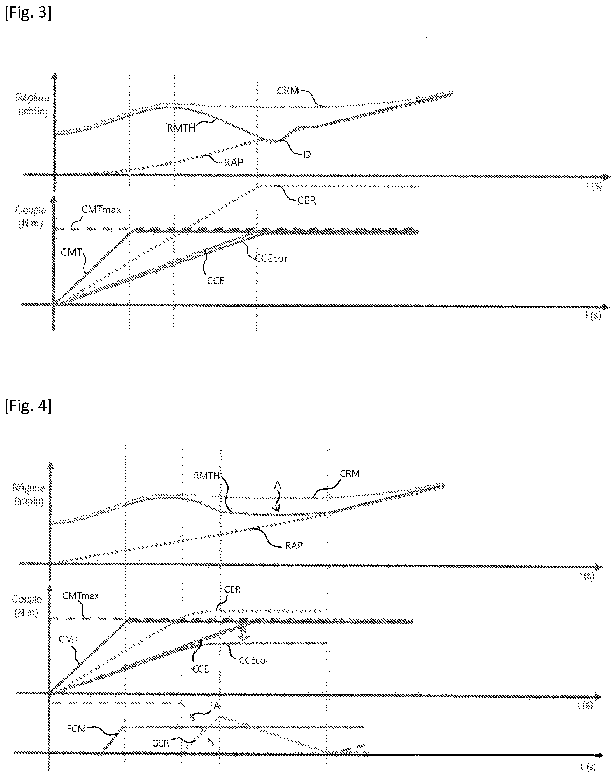

Il va maintenant être fait référence à la figure 3 pour illustrer par des courbes une situation de vie de décollage de l'Etat de la Technique.

Dans les situations de vie de décollage et lors de l'augmentation de la consigne de couple embrayage (figure 3 bas, courbe CCE), l'embrayage peut prélever plus de couple que demandé du fait d'une erreur de réalisation : cette erreur est illustrée schématiquement sur la figure 4 par la courbe CER (Couple Embrayage Réalisé) en traits pointillés.

Dans ce cas, le régime du moteur thermique RMTH va s'effondrer vers le régime de l'arbre primaire RAP malgré avoir atteint son couple maximum (les courbes sont représentées par les références RMTH et RAP en figure 3 haut).

Sur la figure 3 bas ; la courbe illustrant le couple du moteur thermique porte la référence CMT et la courbe illustrant le couple maximum du moteur thermique porte la référence CMTmax.

Quant à la courbe portant la référence CCEcor, elle correspond à la courbe de consigne de couple embrayage corrigée par les moyens de l'Etat de la technique. Sans plus de correction du couple d'embrayage, plusieurs effets indésirables sont à noter :
Il n'est pas possible de fournir un couple de moteur thermique suffisant pour suivre la volonté du conducteur car le couple maximum du moteur thermique dépend directement de son régime de rotation.

La situation génère des vibrations acoustiques et vibratoires car le régime du moteur thermique ne suit pas sa consigne de régime optimale.

Le calage du moteur thermique est, certes, réduit mais n'est pas nul du fait de la proximité du régime du moteur thermique avec son régime de ralenti.

Il existe un risque de chocs ou d'oscillations lors du décollage de l'embrayage (voir référence D sur la courbe en figure 3), du fait d'une mauvaise incidence entre le régime de l'arbre primaire et le régime du moteur thermique.

La figure 4 montre des courbes qui illustrent la même situation de vie (que celle montrée sur la figure 3) quand l'invention est mise en oeuvre.

L'objet de l'invention est de calculer une limitation de gradient de couple de l'embrayage en fonction de la charge du moteur thermique et de son évolution de régime.

Le dispositif conforme à l'invention calcule un facteur de charge de moteur thermique (voir la courbe portant la référence FCM sur la figure 4 bas) en fonction du couple CMT réalisé par le moteur thermique et en fonction de son couple maximum CMTmax.

Le dispositif calcule également un gradient d'écart de régime (courbe GER sur la figure 4 bas) entre le régime de moteur thermique et sa consigne.

En fonction de l'Etat de ces deux dépendances (FCM et GER), le dispositif en déduit un facteur d'atténuation de gradient de couple embrayage qui s'applique sur la consigne de couple embrayage : ce facteur d'atténuation est illustré par la courbe FA en figure 4 (bas).

La logique suivante est appliquée :
Si le moteur est fortement chargé et si son régime s'éloigne de sa consigne alors le gradient de couple embrayage est réduit.

Cela a pour conséquence de stopper la montée en couple réalisé par l'embrayage (voir la courbe consigne de couple embrayage CCE et la courbe de consigne de couple embrayage corrigée CCEcor sur la figure 4 milieu) et de limiter une transmission excessive de couple embrayage au moteur thermique (voir la courbe du couple d'embrayage réalisé CER).

Il en résulte l'arrêt de la chute de régime du moteur thermique pendant l'accostage (voir point A) et une qualité d'accostage préservée (on constate que la courbe du régime de l'arbre primaire est sensiblement droite sur la figure 4).

On comprend de ce qui précède comment l'invention permet d'optimiser le régime du moteur thermique en limitant le gradient du couple d'embrayage.

## Revendications

1. Procédé pour optimiser un régime de moteur thermique (30) d'un véhicule à boite de vitesse (32) automatisée lors d'un accostage, ledit véhicule comportant en outre un système d'embrayage (31), une boite de vitesse (32) comprenant une machine électrique (320) assurant la commande d'un mouvement de transmission aux roues (4) dudit véhicule, ledit accostage du moteur thermique (30) étant assuré par glissement dudit embrayage (31) entre ledit moteur thermique (30) en rotation et un arbre primaire (AP) relié aux roues (4), ledit procédé étant mis en oeuvre par un dispositif d'optimisation (1) communiquant avec un module de commande moteur (2) et un module de commande embrayage (5),
ledit procédé comportant :
- une étape suivant laquelle une information de régime de moteur réel (RMTH) est fournie par ledit module de commande moteur (2) audit dispositif d'optimisation (1),
- une autre étape suivant laquelle ladite information de régime moteur réel (RMTH) est comparée à une information de consigne de régime de moteur (CRM) par ledit dispositif d'optimisation (1),
- et encore une autre étape suivant laquelle, en cas de non concordance entre lesdites informations de régime moteur réel (RMTH) et de consigne de régime de moteur (CRM), le dispositif d'optimisation (1) transmet au module de commande embrayage (5) un facteur (FG) d'atténuation du gradient de couple embrayage pour limiter le gradient de couple embrayage, **caractérisé en ce que**
ledit facteur d'atténuation (FG) dudit gradient de couple d'embrayage est calculé à partir d'un facteur de charge de moteur thermique (FCM) qui est fonction du couple du moteur thermique réalisé (CMT) et d'un couple maximum (CMTmax), et à partir d'un gradient d'écart de régime entre un régime de moteur thermique réel (RMTH) et une consigne de régime de moteur thermique (CRM).

2. Procédé selon la revendication 1, dans lequel ladite information de consigne de régime du moteur thermique (CRM) est calculée par le module de commande moteur (2) à partir d'une consigne de couple moteur (CCM) qui est identifiée suivant une information (PA) de position d'une pédale d'accélération (6) actionnée par un conducteur.

3. Ensemble pour optimiser un régime de moteur thermique (30) dans un véhicule lors d'un accostage, ledit véhicule comportant en outre un système d'embrayage (31), une boite de vitesse automatisée (32) comprenant une machine électrique (320) assurant la commande d'un mouvement de transmission aux roues (4) dudit véhicule, ledit accostage du moteur thermique (30) étant assuré par glissement dudit embrayage (31) entre un moteur en rotation (30) et un arbre primaire (AP) relié aux roues (4), ledit ensemble comportant un dispositif d'optimisation (1), un module de commande moteur (2) et un module de commande embrayage (5), ledit module de commande moteur (2) fournissant une information de régime de moteur réel (RMTH) audit dispositif d'optimisation (1), ledit dispositif d'optimisation (1) étant apte à comparer ladite information de régime moteur réel (RMTH) avec une information de consigne de régime de moteur thermique (CRM) et à transmettre au module de commande embrayage (5) un facteur (FG) d'atténuation du gradient de couple embrayage pour limiter le gradient de couple embrayage en cas de non concordance entre lesdites informations de régime moteur réel (RMTH) et de consigne de régime de moteur (CRM), **caractérisé en ce que** ledit dispositif d'optimisation (1) calcule ledit facteur d'atténuation (FG) dudit gradient de couple d'embrayage à partir d'un facteur de charge de moteur thermique (FCM) qui est fonction du couple du moteur thermique (CMT) réalisé et d'un couple maximum (CMTmax), et à partir d'un gradient d'écart de régime entre un régime de moteur thermique réel (RMTH) et une consigne de régime de moteur thermique (CRM).

4. Ensemble selon la revendication 3, dans lequel le module de commande moteur (2) calcule ladite information de consigne de régime du moteur thermique (CRM) à partir d'une consigne de couple moteur (CCM) qui est identifiée suivant une information de position (PA) d'une pédale d'accélération (6) actionnée par un conducteur.

5. Véhicule équipé d'un ensemble selon l'une quelconque des revendications 3 ou 4.

## Patentansprüche

1. Verfahren zur Optimierung der Motordrehzahl (30) eines Fahrzeugs mit einem automatisierten Getriebe (32) beim Andocken, wobei das Fahrzeug weiterhin ein Kupplungssystem (31), ein Getriebe (32) mit einer elektrischen Maschine (320) zur Steuerung von a Übertragung der Bewegung auf die Räder (4) des Fahrzeugs, wobei das Andocken des Wärmemotors (30) durch Gleiten der Kupplung (31) zwischen dem sich drehenden Wärmemotor (30) und einer damit verbundenen Primärwelle (AP) gewährleistet wird Räder (4), wobei das Verfahren durch eine Optimierungsvorrichtung (1) implementiert wird, die mit einem Motorsteuermodul (2) und einem Kupplungssteuermodul (5) kommuniziert, wobei das Verfahren Folgendes umfasst:
- einen Schritt, in dem Informationen über die tatsächliche Motordrehzahl (RMTH) vom Motorsteuermodul (2) an die Optimierungseinrichtung (1) geliefert werden,
- einen weiteren Schritt, bei dem die tatsächliche Motordrehzahlinformation (RMTH) mit der Motordrehzahl-Sollwertinformation (CRM) durch die Optimierungseinrichtung (1) verglichen wird,
- und noch einen weiteren Schritt, gemäß dem im Falle einer Nichtübereinstimmung zwischen der tatsächlichen Motordrehzahlinformation (RMTH) und dem Motordrehzahlsollwert (CRM) die Optimierungsvorrichtung (1) ein Kupplungsmoment an das Kupplungssteuermodul (5) übermittelt Gradienten-Dämpfungsfaktor (FG) zur Begrenzung des KupplungsmomentGradienten, **dadurch gekennzeichnet, dass** der Dämpfungsfaktor (FG) der Kupplungsmoment-Gradient ist berechnet aus einem Wärmekraftmaschinen-Lastfaktor (FCM), der eine Funktion des erreichten Drehmoments der Wärmekraftmaschine (CMT) und eines maximalen Drehmoments (CMTmax) ist, und aus einem Drehzahldifferenzgradienten zwischen einer realen Wärmekraftmaschinendrehzahl (RMTH) und a Drehzahlsollwert des Wärmemotors (CRM).

2. Verfahren nach Anspruch 1, bei dem die Informationen über den Drehzahlsollwert (CRM) des Wärmemotors vom Motorsteuermodul (2) aus einem Motordrehmomentsollwert (CCM) berechnet werden, der anhand der Position eines Gaspedals (PA) identifiziert wird. 6) durch einen Fahrer betätigt.

3. Baugruppe zur Optimierung der Drehzahl eines Wärmemotors (30) in einem Fahrzeug während des Andockens, wobei das Fahrzeug außerdem ein Kupplungssystem (31) und ein automatisiertes Getriebe (32) mit einer elektrischen Maschine (320) umfasst, die die Steuerung einer Getriebebewegung übernimmt die Räder (4) des Fahrzeugs, wobei das Andocken des Wärmemotors (30) durch das Gleiten der Kupplung (31) zwischen einem rotierenden Motor (30) und einer mit den Rädern (4) verbundenen Primärwelle (AP) gewährleistet wird, wobei die Baugruppe eine Optimierungsvorrichtung (1), ein Motorsteuermodul (2) und ein Kupplungssteuermodul (5) umfasst, wobei das Motorsteuermodul (2) Motordrehzahlinformationen (RMTH) an die Optimierungsvorrichtung (1) liefert, die Optimierung Vorrichtung (1), die in der Lage ist, die tatsächliche Motordrehzahlinformation (RMTH) mit thermischer Motordrehzahlsollwertinformation (CRM) zu vergleichen und einen Kupplungsmomentgradienten-Dämpfungsfaktor (FG) zur Begrenzung der Kupplung an das Kupplungssteuermodul (5) zu übertragen Drehmomentgradient im Falle einer Nichtübereinstimmung zwischen der tatsächlichen Motordrehzahlinformation (RMTH) und der Drehzahlreferenz (CRM), **dadurch gekennzeichnet, dass** die Optimierungseinrichtung (1) den Dämpfungsfaktor (FG) des Kupplungsdrehmomentgradienten aus einem Wärmekraftmaschinenlastfaktor (FCM) berechnet, der eine Funktion des erreichten Wärmekraftmaschinendrehmoments (CMT) und eines maximalen Drehmoments ist (CMTmax) und aus einem Differenzgradienten von Drehzahl zwischen einer realen Wärmekraftmaschinendrehzahl (RMTH) und einem Wärmekraftmaschinendrehzahlsollwert (CRM).

4. Baugruppe nach Anspruch 3, bei der das Motorsteuermodul (2) die Informationen zum Drehzahlsollwert (CRM) des Wärmemotors aus einem Motordrehmomentsollwert (CCM) berechnet, der anhand der Positionsinformationen (PA) eines Gaspedals (6) identifiziert wird, durch einen Fahrer betätigt.

5. Fahrzeug, das mit einer Baugruppe nach einem der Ansprüche 3 oder 4 ausgestattet ist.

## Claims

1. Method for optimizing the engine speed (30) of a vehicle with an automated gearbox (32) when docking, said vehicle further comprising a clutch system (31), a gearbox (32) comprising an electric machine (320) ensuring the control of a transmission movement to the wheels (4) of said vehicle, said docking of the heat engine (30) being ensured by sliding of said clutch (31) between said heat engine (30) in rotation and a primary shaft (AP) connected to the wheels (4), said method being implemented by an optimization device (1) communicating with an engine control module (2) and a clutch control module (5), said method comprising:
- a step in which real engine speed information (RMTH) is supplied by said engine control module (2) to said optimization device (1),
- another step in which said real engine speed information (RMTH) is compared with engine speed setpoint information (CRM) by said optimization device (1),
- and yet another step according to which, in the event of a mismatch between said real engine speed information (RMTH) and engine speed setpoint (CRM), the optimization device (1) transmits to the clutch control module (5) a clutch torque gradient attenuation factor (FG) for limiting the clutch torque gradient, **characterized in that** said attenuation factor (FG) of said clutch torque gradient is calculated from a heat engine load factor (FCM) which is a function of the torque of the heat engine achieved (CMT) and a maximum torque (CMTmax), and from a speed difference gradient between a real heat engine speed (RMTH) and a heat engine speed setpoint (CRM).

2. Method according to claim 1, in which said heat engine speed setpoint information (CRM) is calculated by the engine control module (2) from an engine torque setpoint (CCM) which is identified according to information ( PA) position of an accelerator pedal (6) actuated by a driver.

3. Assembly for optimizing the speed of a thermal engine (30) in a vehicle during docking, said vehicle further comprising a clutch system (31), an automated gearbox (32) comprising an electric machine (320) providing the control of a transmission movement to the wheels (4) of said vehicle, said docking of the heat engine (30) being ensured by sliding of said clutch (31) between a rotating motor (30) and a primary shaft (AP) connected to the wheels (4), said assembly comprising an optimization device (1), an engine control module (2) and a clutch control module (5), said engine control module (2) providing engine speed information (RMTH) to said optimization device (1), said optimization device (1) being capable of comparing said real engine speed information (RMTH) with thermal engine speed setpoint information (CRM) and of transmitting to the clutch control module (5), a clutch torque gradient attenuation factor (FG) to limit the clutch torque gradient in the event of mismatch between said real engine speed information (RMTH) and speed reference (CRM), **characterized in that** said optimization device (1) calculates said attenuation factor (FG) of said clutch torque gradient from a heat engine load factor (FCM) which is function of the heat engine torque (CMT) achieved and a maximum torque (CMTmax), and from a difference gradient of speed between a real heat engine speed (RMTH) and a heat engine speed setpoint (CRM).

4. Assembly according to claim 3, in which the engine control module (2) calculates said heat engine speed setpoint information (CRM) from an engine torque setpoint (CCM) which is identified according to position information ( PA) of an accelerator pedal (6) actuated by a driver.

5. Vehicle fitted with an assembly according to any one of claims 3 or 4.
